Europäisches Patentamt

European Patent Office

Office européen des brevets

(11) Numéro de publication : **0 099 277 B1**

(19)

(12) **FASCICULE DE BREVET EUROPÉEN**

(45) Date de publication du fascicule du brevet :
16.04.86

(51) Int. Cl.⁴ : **G 08 C 15/12**, **G 01 S 13/76**, **F 41 G 7/30**

(21) Numéro de dépôt : **83401169.4**

(22) Date de dépôt : **08.06.83**

(54) **Système de décodage d'ordres transmis par un ensemble d'émetteurs impulsionnels cycliques synchrones.**

(30) Priorité : **11.06.82 FR 8210217**

(43) Date de publication de la demande :
**25.01.84 Bulletin 84/04**

(45) Mention de la délivrance du brevet :
**16.04.86 Bulletin 86/16**

(84) Etats contractants désignés :
**AT BE CH DE FR GB IT LI LU NL SE**

(56) Documents cités :
**FR-A- 2 284 100**
**US-A- 3 455 522**
**IEEE TRANSACTIONS ON AEROSPACE AND ELEC-
TRONIC SYSTEMS, vol. AES-7, no. 5, septembre
1971, pages 809-829, New York, USA B.E. KEISER:
"Unified control systems"**

(73) Titulaire : **CENTRE NATIONAL D'ETUDES SPATIALES
129, Rue de l'Université
F-75007 Paris (FR)**

(72) Inventeur : **Knight, Constant
173, Boulevard Salicis
F-83200 Toulon (FR)**

(74) Mandataire : **Mongrédien, André et al
c/o BREVATOME 25, rue de Ponthieu
F-75008 Paris (FR)**

Jouve, 18, rue St-Denis, 75001 Paris, France

**0 099 277**

**Description**

La présente invention concerne un système de décodage d'ordres transmis par un ensemble d'émetteurs impulsionnels, cycliques, synchrones.

Elle peut s'appliquer particulièrement à la télécommande d'engins mobiles tels que des lanceurs de satellites.

Notons qu'il est généralement nécessaire de monter des répondeurs sur les fusées afin d'assurer la qualité de la localisation effectuée par des radars. Par ailleurs, on doit disposer de systèmes émetteurs au sol, de récepteurs et systèmes de décodage à bord, pour commander certains équipements embarqués.

La présente invention permet entre autres, l'utilisation des équipements de localisation (radar et répondeur) pour transmettre des ordres exploitables en vol, éliminant ainsi les liaisons hertziennes actuellement utilisées pour les télécommandes.

Certains systèmes existent déjà, permettant de coder l'émission des radars, de façon à personnaliser la localisation (dans le cas de poursuites multiples), ou pour passer des ordres de commande élémentaires. Toutefois, ces systèmes ne permettent pas de façon simple et fiable de protéger un ordre contre l'intervention d'un intrus.

L'invention a pour but de remédier à ces inconvénients et notamment de réaliser un système de décodage permettant le passage d'ordres protégés, en présence d'autres émissions de même nature, synchronisés ou non. Ces ordres peuvent être issus d'un ou de plusieurs émetteurs et sont exploités, même si leur émission est décalée d'un émetteur à l'autre. Chaque ordre est constitué par une série déterminée de codes élémentaires, un code étant fourni à chaque récurrence de l'émetteur et étant défini par sa valeur, qui est le temps séparant les fronts montants de deux impulsions qui le constituent.

Le fait de devoir reconnaître un ordre ainsi défini en présence des impulsions d'autres émetteurs (impulsions parasites ou utiles), amène à identifier l'origine des signaux reçus, et à synchroniser le décodage. Cela est possible dans le cas d'émissions à fréquence de récurrence fixe ou de loi parfaitement définie.

Le principe de décodage proposé dans l'invention fait appel à des moyens de synchronisation et à des moyens de démodulation. Les moyens de synchronisation sont constitués d'autant de sous-systèmes élémentaires qu'on a admis de traiter d'émetteurs simultanément ; chaque sous-système fournit un créneau d'autorisation de traitement bien identifié pour un émetteur respectant le synchronisme attendu. Les moyens de démodulation reçoivent les impulsions dans les créneaux d'autorisation ci-dessus mentionnés et déterminent les valeurs des codes reçus.

En fonctionnement normal, il n'arrive qu'un seul code (deux impulsions) au cours d'une autorisation ; l'arrivée d'une impulsion parasite dans ce créneau crée deux codes parasites, un avec chaque impulsion du code utile. Théoriquement, l'arrivée de p impulsions parasites en plus des deux attendues conduit à $C^2_{2+p}$ codes possibles. En fait, on choisit de parer l'éventualité de l'occurrence d'un parasite ou de deux au maximum, pour rester dans un cadre réaliste ; cela conduit à prévoir de contrôler trois ou six codes selon le choix effectué a priori, pour chaque récurrence d'un émetteur.

Le principe de décodage dans l'invention fait aussi appel à des moyens de décodage qui comprennent une logique qui reçoit d'une part les autorisations identifiées issues des moyens de synchronisation, et d'autre part, les valeurs des codes fournies par les moyens de démodulation. Pour chaque émetteur, les moyens de décodage comparent la succession des codes reçus avec ceux constituant la référence des ordres. Un ordre est décodé dès que la corrélation est trouvée entre sa référence et la série des codes reçus.

L'invention a pour objet un système de décodage d'ordres transmis par un ensemble d'émetteurs impulsionnels, cycliques et synchrones, chaque ordre étant constitué par plusieurs codes apparaissant à fréquence de récurrence fixe, sur un ensemble de plusieurs périodes successives, chaque code comprenant au moins deux impulsions et les codes successifs d'un ordre étant définis par modulation des intervalles de temps qui séparent les impulsions de chaque code, chaque ordre pouvant être émis identiquement par plusieurs émetteurs présentant des décalages de phase d'émission prédéterminés, caractérisé en ce qu'il comprend :

des moyens de synchronisation recevant les impulsions et fournissant sur des sorties, des signaux d'autorisation de traitement, pour des moyens de démodulation et de décodage, les moyens de synchronisation comprenant des moyens monostables en nombre égal à celui des émetteurs à traiter, ces moyens étant reliés en série et rebouclés les uns sur les autres, un moyen monostable fournissant sur une sortie, un signal d'autorisation en synchronisme avec un émetteur, la durée de conduction du moyen monostable étant supérieure à celle du code de durée la plus élevée dans les codes des ordres, les autres moyens monostables fournissant respectivement et de la même manière, des signaux d'autorisation, en synchronisme respectivement avec les autres émetteurs, chaque moyen monostable inhibant le déclenchement des autres moyens monostables, au moins pendant la durée de chaque signal d'autorisation qu'il fournit,

des moyens de démodulation recevant ces autorisations et les impulsions et fournissant des valeurs numériques successives correspondant respectivement auxdits intervalles de temps,

des moyens de décodage reliés aux moyens de démodulation et aux moyens de synchronisation,

2

pour comparer les valeurs numériques reçues des moyens de démodulation avec des valeurs numériques de référence enregistrées, et en cas de corrélation entre ces valeurs, pour fournir sur des sorties spécifiques des signaux correspondant aux ordres décodés.

Selon une autre caractéristique, les moyens de démodulation comprennent une horloge reliée à des moyens de comptage par l'intermédiaire d'un ensemble logique qui reçoit, d'une part sur une entrée toutes les impulsions provenant des émetteurs, et d'autre part, sur une autre entrée, les signaux d'autorisation fournis par les moyens de synchronisation, les moyens de comptage permettant de compter, par l'intermédiaire de l'ensemble logique, toutes les impulsions d'horloge fournies entre les impulsions successivement reçues, les moyens de comptage fournissant aux moyens de décodage, des valeurs numériques correspondant à ces comptages.

Selon une autre caractéristique, les moyens de comptage comprennent un premier et un deuxième compteurs reliés respectivement à des sorties de l'ensemble logique et susceptibles d'être déclenchés respectivement à partir de deux impulsions, le premier compteur qui reçoit la première impulsion étant un compteur à débordement de capacité qui arrête son comptage ainsi que le comptage de l'autre compteur par un signal d'interruption, lorsqu'il parvient à débordement, la valeur numérique du code étant la valeur numérique de la différence entre les contenus des premier et deuxième compteurs, en l'absence d'impulsions parasites.

Selon une autre caractéristique, les moyens de comptage comprennent autant de compteurs supplémentaires qu'il est prévu de traiter d'impulsions parasites pouvant brouiller un code utile.

Selon une autre caractéristique, les moyens de décodage comprennent un microprocesseur relié à une mémoire et recevant sur des entrées, d'une part les signaux d'autorisation provenant des moyens de synchronisation, et d'autre part, les valeurs numériques des contenus des compteurs, le microprocesseur (28) comparant pour chaque code, les valeurs desdites différences avec des valeurs numériques de référence enregistrées dans la mémoire et correspondant aux codes attendus dans chaque ordre émis.

Enfin, selon une autre caractéristique, les moyens de décodage sont aptes à traiter simultanément des ordres issus d'émetteurs différents.

Les caractéristiques et avantages de l'invention ressortiront mieux de la description qui va suivre, donnée en référence aux dessins annexés dans lesquels :

la figure 1 est un chronogramme qui représente schématiquement une succession de codes formant un ordre transmis au système de décodage de l'invention, par un radar ;

la figure 2 représente schématiquement le système de décodage de l'invention ;

la figure 3 représente schématiquement les moyens de synchronisation qui interviennent dans le système de décodage de l'invention ;

la figure 4 représente de manière plus détaillée l'un des moyens de synchronisation ;

la figure 5 est un chronogramme des signaux qui apparaissent en certains points caractéristiques des moyens de synchronisation ;

la figure 6 représente schématiquement les moyens de démodulation et de décodage du système de l'invention ;

la figure 7 est un diagramme explicatif ;

les figures 8 à 11 sont des organigrammes qui permettent de mieux comprendre la logique des moyens de décodage du dispositif de l'invention.

On supposera dans toute la suite qu'un système de localisation à base de radar de poursuite et de répondeur radar sert de support au système de décodage de l'invention.

Les répondeurs ne répondent qu'à des interrogations codées (code à deux impulsions de valeur bien définie). Ils assurent en général 2 500 réponses par seconde, ce qui leur permet de travailler par exemple avec quatre radars ayant une fréquence de récurrence (fr) de l'ordre de 600 Hz. Certains disposent d'une sortie vidéo fournissant à un utilisateur éventuel une impulsion calibrée pour chaque impulsion hyperfréquence reçue.

Le système qui va être décrit est raccordé à la sortie vidéo de ce type de répondeur. Il répond aux hypothèses de travail suivantes :

décodage des signaux issus de trois radars parmi les quatre possibles,

protection contre la présence d'une seule impulsion parasite à proximité d'un code attendu,

exploitation d'un ordre même s'il n'est pas émis par tous les radars assurant la localisation,

exploitation d'un ordre même si la transmission est décalée d'un grand nombre de récurrences d'un radar à l'autre,

en l'absence d'ordre à transmettre, la localisation fonctionne normalement, les radars n'émettant qu'un code d'interrogation du répondeur, que nous appellerons désormais code « INT »,

l'émission d'un ordre comporte la transmission de séquences de $n_1$ récurrences codées suivant une loi particulière, séparées par $n_2$ récurrences d'interrogation du répondeur (INT),

l'émission des radars est normalement « phasée », c'est-à-dire qu'au cours d'une période T de récurrence, les signaux issus des différents radars doivent être séparés d'au moins 380 µs (avec l'exemple choisi).

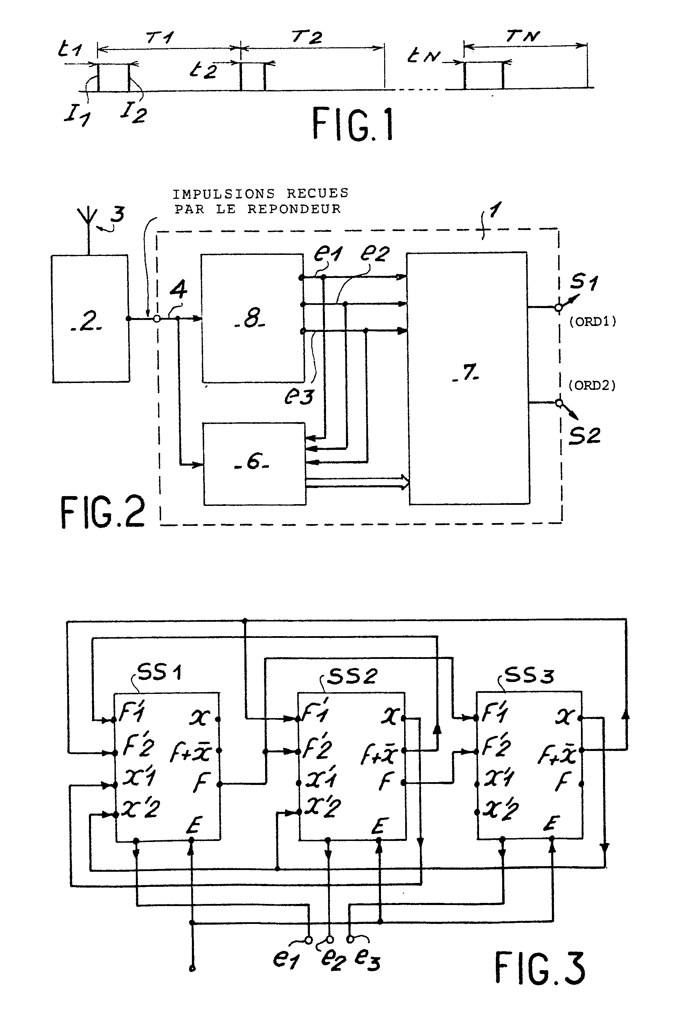

La figure 1 est un chronogramme qui représente schématiquement des impulsions émises par un radar. Elles sont transmises à l'identique par plusieurs émetteurs présentant des relations de phases prédéterminées. Un ordre de télécommande qui pourra être décodé par le système de l'invention, peut

**0 099 277**

être constitué de la manière suivante : sur plusieurs périodes de récurrence $T_1$, $T_2$, ... $T_N$ successives, de durée identique et formant un ensemble de périodes prédéterminées, on transmet à chaque période deux impulsions telles que $I_1$, $I_2$, qui forment un code. L'ensemble des codes apparaissant au cours des périodes $T_1$ ... $T_N$ définit un ordre ; parmi ces codes, certains peuvent être des codes d'interrogation (INT). Chaque code est défini non seulement par le nombre des impulsions qu'il contient (deux dans l'exemple considéré), mais aussi par l'intervalle de temps qui sépare deux impulsions du code. Les intervalles de temps $t_1$, $t_2$, ... $t_n$ sont des intervalles de temps modulés dans l'ensemble des codes définissant un ordre ou une interrogation. Comme on le verra plus loin en détail, le système de l'invention doit pouvoir vérifier que les codes qui définissent un ordre, sont identiques à des codes de référence, mais doit aussi pouvoir vérifier que l'ordre reçu, répété un nombre $\underline{m}$ de fois prédéterminé, correspond bien à l'ordre attendu, au cours de ces $\underline{m}$ répétitions.

La figure 2 représente schématiquement un ensemble de réalisation du système de l'invention. Le système de décodage 1 est supposé relié par son entrée à la sortie 4 d'un répondeur radar 2 qui reçoit sur une antenne 3, des impulsions provenant d'émetteurs d'ordres codés. Ce répondeur qui ne fait pas partie de l'invention est constitué de manière connue et n'est pas représenté de manière détaillée sur la figure. La sortie 4 du répondeur fournit au système de décodage une impulsion vidéo chaque fois qu'il reçoit une impulsion hyperfréquence du radar. Après décodage, des ordres $ORD_1$ et/ou $ORD_2$ sont caractérisés par des signaux $S_1$, $S_2$ pouvant apparaître sur des sorties du système de décodage. On a limité à deux le nombre d'ordres que le système peut décoder, mais ce nombre peut être différent. Le système de décodage comprend des moyens de démodulation 6 qui reçoivent les impulsions et en déduisent les codes. Les moyens de démodulation fournissent des valeurs numériques successives correspondant respectivement aux intervalles de temps $t_1$, $t_2$, ... $t_n$ représentés sur la figure 1 et qui peuvent être des intervalles de temps correspondant aux codes de différents ordres à décoder et à des codes d'interrogation. Le système de décodage comprend aussi des moyens de décodage 7 qui fournissent des signaux $S_1$, $S_2$, lorsque des ordres $ORD_1$, $ORD_2$ ont été reçus par le système. Ces moyens de décodage permettent de comparer les valeurs numériques fournies par les moyens de démodulation 6, avec des valeurs numériques de référence enregistrées pour chaque code. Le système de décodage comprend enfin des moyens de synchronisation 8 qui reçoivent toutes les impulsions fournies par le répondeur 2. Ces moyens de synchronisation fournissent sur des sorties, des signaux de commande $e_1$, $e_2$, $e_3$ ; ces signaux de commande définissent, comme on le verra plus loin en détail, des fenêtres de traitement qui permettent aux moyens de démodulation 6 et de décodage 7 de traiter séparément à chaque récurrence, les impulsions des codes fournis par chaque émetteur. Dans l'exemple de mise en œuvre du dispositif à bord d'un engin mobile, ces fenêtres de traitement permettent de démoduler les codes des ordres reçus. Les signaux $S_1$, $S_2$ sont disponibles sur les sorties des moyens de décodage, lorsque les ordres $ORD_1$, $ORD_2$ ayant été émis, les valeurs numériques successives obtenues en sortie des moyens de démodulation 6, correspondent aux valeurs numériques de référence, enregistrées pour les codes successifs appartenant aux ordres $ORD_1$, $ORD_2$.

En fait, dans le cas où des émetteurs sont des radars qui peuvent émettre le même ordre avec un décalage de plusieurs récurrences dans les codes qui constituent cet ordre, le système de l'invention ne doit pas corréler les codes, sans les attribuer à chacun des radars qui les ont émis. Une première opération que doit effectuer le système de l'invention est donc d'essayer de reconnaître l'émetteur radar de chaque code reçu. De plus, le répondeur peut fournir des impulsions parasites et il faut éviter de perdre du temps en traitant ces impulsions parasites et en risquant de ne pas traiter les impulsions utiles d'un ou plusieurs codes. Pour cela, comme on le verra plus loin en détail, le système n'effectue des traitements de décodage, que dans les zones de forte probabilité d'occurrence d'impulsions utiles, grâce aux signaux d'autorisation de traitement, $e_1$, $e_2$, $e_3$.

La figure 3 représente schématiquement les moyens de synchronisation du système de l'invention. Ces moyens de synchronisation fournissent les signaux d'autorisation $e_1$, $e_2$, $e_3$ et permettent d'attribuer les impulsions reçues à chaque radar, en créant des périodes de réception et d'inhibition. Ces moyens de synchronisation comprennent des moyens monostables $SS_1$, $SS_2$, ... $SS_n$, en nombre $\underline{n}$ égal à celui des émetteurs à traiter ($\underline{n}$ est égal à trois dans l'exemple de réalisation considéré). Ces moyens monostables sont reliés en série et rebouclés les uns sur les autres. Chaque moyen monostable fournit un signal de commande sur une sortie. Les fenêtres qui apparaissent, comme on le verra plus loin en détail, dans chaque signal de commande, sont des impulsions dont la durée correspond à la durée de conduction du moyen monostable correspondant ; ces impulsions sont produites à la fréquence de récurrence, en synchronisme avec la première impulsion apparaissant à chaque récurrence, dans un ordre fourni par un émetteur. La durée de conduction du moyen monostable est constante et elle est supérieure à celle du code de durée le plus élevé dans les codes des ordres émis. Les autres moyens monostables fournissent respectivement et de la même manière, des signaux de commande, en synchronisme respectivement avec les premières impulsions des ordres fournis par les autres émetteurs ; chaque moyen monostable inhibe le déclenchement des autres moyens monostables, au moins pendant la durée de chaque impulsion de commande qu'il fournit. Les moyens monostables $SS_1$, $SS_2$, ... $SS_n$, sont identiques et présentent des entrées E qui reçoivent toutes les impulsions provenant du répondeur (éventuellement des impulsions parasites). Chacun des moyens de synchronisation présente des sorties f, $f + \bar{x}$, x et des entrées $x'_2$, $x'_1$, $f'_1$, $f'_2$ qui seront décrites plus loin en détail.

4

Dans l'exemple considéré la sortie $f + \bar{x}$ du troisième monostable $SS_3$ est reliée à l'entrée $f'_2$ du premier moyen monostable $SS_1$ et à l'entrée $f'_1$ du deuxième moyen monostable $SS_2$. La sortie x du troisième moyen monostable $SS_3$ est reliée aux entrées $x'_2$ des moyens monostables $SS_1$ et $SS_2$. La sortie $f + \bar{x}$ du deuxième moyen monostable $SS_2$ est reliée à l'entrée $f'_1$ du premier moyen monostable $SS_1$. La sortie f du premier moyen monostable $SS_1$ est reliée à l'entrée $f'_2$ du second moyen monostable $SS_2$ et à l'entrée $f'_1$ du troisième moyen monostable $SS_3$. La sortie f du deuxième moyen monostable $SS_2$ est reliée à l'entrée $f'_2$ du troisième moyen monostable $SS_3$. Les sorties x, $f + \bar{x}$ du premier moyen monostable $SS_1$ et la sortie f du troisième moyen monostable $SS_3$ ne sont pas connectées. L'entrée $x'_1$ du deuxième moyen monostable $SS_2$ et les entrées $x'_1$ et $x'_2$ du troisième moyen monostable $SS_3$, ne sont pas connectées.

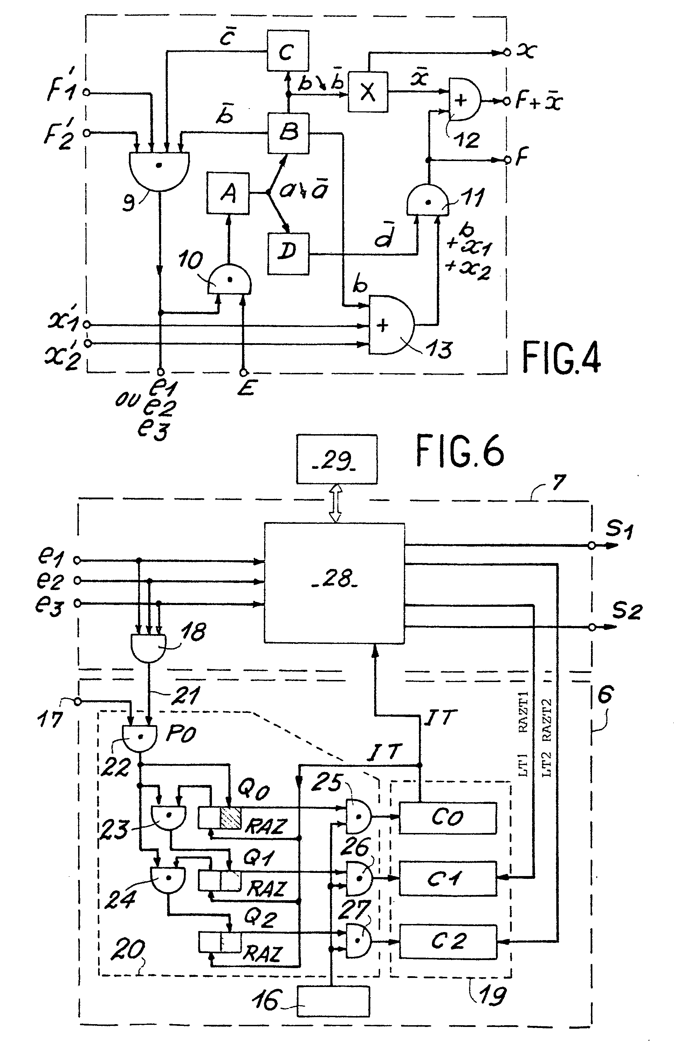

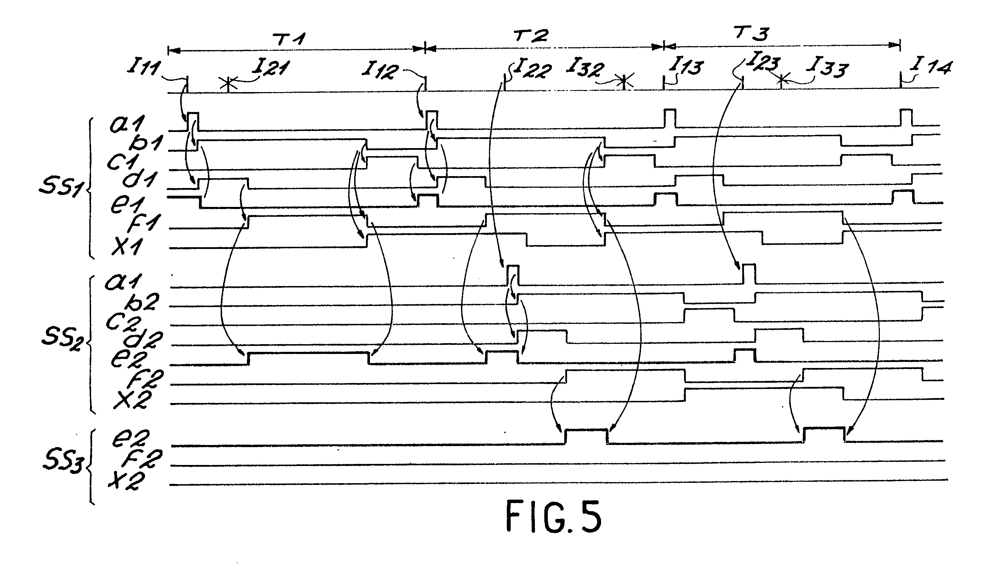

L'un des moyens monostables de la figure précédente est représenté de manière plus détaillée sur la figure 4. Ce moyen monostable comprend des portes 9, 10, 11, de type ET et des portes 12, 13 de type OU. Il comprend également des bascules monostables A, B, C, D et x. Les entrées $f'_1$, $f'_2$, $x'_1$, $x'_2$ et les sorties f, $f + \bar{x}$, x correspondent respectivement aux entrées et aux sorties des moyens monostables représentés schématiquement sur la figure 3. Dans chaque moyen monostable, l'une des entrées E de la porte 10 reçoit toutes les impulsions provenant du répondeur, tandis que la sortie de la porte 9 fournit l'un des signaux de commande ($e_1$ ou $e_2$ ou $e_3$) mentionnés plus haut. La sortie de la porte 9 est reliée à une autre entrée de la porte 10. La sortie de la porte 10 commande la bascule monostable A dont la sortie est reliée aux entrées de commande des bascules monostables B et D. La sortie de la bascule monostable B est reliée à une entrée de la bascule monostable C, à l'entrée de la bascule x et à une entrée de la porte 13. La sortie de la bascule x est reliée à une entrée de la porte 12 dont une autre entrée est reliée à la sortie de la porte 11. La sortie de la bascule monostable D est reliée à une entrée de la porte 11 dont une autre entrée est reliée à la sortie de la porte 13. Cette porte 13 présente deux autres entrées $x'_1$ et $x'_2$ mentionnées sur la figure précédente. La porte 9 est reliée à la sortie de la bascule monostable C et à la sortie de la bascule monostable B. Deux autres entrées de cette porte sont les entrées $f'_1$ et $f'_2$ de la figure précédente. Enfin, la sortie de la porte 11 et les sorties de la porte 12 et de la bascule X, constituent les sorties f, $f + \bar{x}$, x de la figure précédente.

La figure 5 est un chronogramme des signaux qui apparaissent en certains points caractéristiques des moyens de synchronisation. Ce chronogramme permet de mieux comprendre le fonctionnement de chaque moyen monostable des moyens de synchronisation. Pour une meilleure compréhension de ce chronogramme, on se reportera aux figures 3 et 4. Les moyens de synchronisation fonctionnent de la manière suivante :

sur cette figure, on désigne par $a_1$, $b_1$, $c_1$, $x_1$, $d_1$, $e_1$, $f_1$ les signaux apparaissant respectivement sur les sorties des bascules monostables A, B, C, D, X et sur les sorties $\underline{e}$ et $\underline{f}$ de la porte 9 et de la porte 11 du premier moyen monostable $SS_1$ de la figure 3.

De la même manière, on désigne $a_2$, $b_2$, $c_2$, $d_2$, $x_2$, $e_2$, $f_2$, les signaux qui apparaissent respectivement sur les sorties et sur l'entrée des bascules monostables et portes mentionnées plus haut pour le deuxième moyen monostable $SS_2$ de la figure 3. Enfin, on désigne $e_3$, $f_3$, $x_3$, les signaux qui apparaissent respectivement sur la sortie de la porte ET 9, sur la sortie de la porte 11 et sur la sortie de la bascule X, pour le troisième moyen monostable $SS_3$ de la figure 3. On suppose que des impulsions telles que i11, i21, i12, i22, i32, i13, i23, i24, i14, sont appliquées aux entrées des moyens monostables $SS_1$, $SS_2$, $SS_3$ par la sortie du répondeur 2 de la figure 2. Ces impulsions peuvent être celles de codes d'interrogation ou de codes d'un ou plusieurs ordres. Pour faciliter la compréhension du fonctionnement des moyens de synchronisation, on suppose que les impulsions mentionnées plus haut, sont les premières impulsions reçues par le répondeur. On a également représenté sur cette figure des périodes de récurrence $T_1$, $T_2$, $T_3$... etc., égales à une période fixe T de récurrence d'émission. Dans l'exemple de fonctionnement qui va être décrit à l'aide du chronogramme, on supposera aussi que la relation de phases existant entre les trois radars, est un décalage de phases correspondant au moins au quart de la période de récurrence, soit T/4.

Lorsque la première impulsion $i_1$ provenant de l'un des radars parvient aux entrées E des moyens de synchronisation, cette impulsion déclenche la bascule monostable A du premier moyen $SS_1$. La sortie de cette bascule passe au niveau logique 1, ce qui est représenté par le signal $a_1$ sur la figure 5. Si l'on considère que l'intervalle de temps maximal entre deux impulsions d'un code est 20 μs, la durée de conduction de cette bascule monostable est légèrement supérieure à cet intervalle de temps, soit par exemple 50 μs. La retombée du signal de sortie $a_1$ de la bascule monostable A du premier moyen monostable $SS_1$, provoque le déclenchement des bascules monostables B et D du premier moyen monostable $SS_1$. Les signaux de sortie de ces bascules monostables B et D sont représentés en $b_1$ et $d_1$. Dans l'exemple de réalisation du système de l'invention, pour lequel on suppose que les ordres peuvent être transmis par trois émetteurs et que ces émetteurs représentent des décalages de phases supérieurs ou égaux à T/4, la durée de conduction de la bascule B est d'environ 3T/4. La retombée du signal $b_1$ de sortie de la bascule B déclenche la bascule monostable C. Le signal de sortie de cette bascule monostable est représenté en $c_1$. Les bascules monostables C et D ont une durée de conduction voisine de T/4. Le rôle des bascules C et D est de délimiter de part et d'autre des impulsions provenant d'un radar, des zones d'inhibition des moyens de synchronisation $SS_2$ et $SS_3$. En fait, à la réception de l'impulsion i11, le moyen de synchronisation $SS_1$ interdit aux moyens $SS_2$ et $SS_3$ de recevoir tout signal entre

0 099 277

l'instant $T_0$ de réception de l'impulsion i11 et l'instant $T_0 + T/4$. De la même manière, ce premier moyen de synchronisation interdit aux autres toute réception entre $T_0 + (T — T/4)$ et $T_0 + T$. Le premier moyen de synchronisation $SS_1$ est lui-même inhibé pendant tout le temps où les signaux $b_1$ et $c_1$ sont au niveau logique 1. L'autorisation de réception fournie par le premier moyen de synchronisation $SS_1$ est représenntée sur le chronogramme par le signal d'autorisation $e_1$. La durée de cette fenêtre d'autorisation est plus grande que celle du code de durée la plus élevée dans les codes des ordres émis par les différents émetteurs. Cette fenêtre, lorsque l'impulsion i11 est bien l'impulsion d'un code émis, est reproduite par le premier moyen de synchronisation, avec une fréquence correspondant à la fréquence de récurrence d'un émetteur.

L'équation logique du signal d'autorisation $e_1$ fourni par le premier moyen de synchronisation peut s'écrire :

$$e_1 = \overline{b_1} \cdot \overline{c_1}$$

Les impulsions i21, i22, i32, ne sont pas traitées par le premier moyen de synchronisation $SS_1$, car elles surviennent lorsque le signal $e_1$ présente un niveau logique égal à 0 ($e_1 = 0$). Dans le cas où des impulsions surviennent entre les passages au niveau logique 1 des signaux $d_1$ et $c_1$, le second moyen de synchronisation $SS_2$ va permettre d'attribuer ces impulsions à un autre émetteur radar. C'est le premier moyen de synchronisation $SS_1$ qui fournit au second moyen $SS_2$, une autorisation représentée par le signal $f_1$ dont l'équation logique est :

$$f_1 = b_1 \cdot \overline{d_1.}$$

Ce signal est celui qui est fourni par la sortie de la porte 11 du premier moyen de synchronisation $SS_1$, le signal de commande $e_1$ étant fourni par la sortie de la porte 9 de ce premier moyen de synchronisation.

Lorsque le signal $f_1$ présente un niveau logique 1 ($f_1 = 1$), tout signal provenant d'un émetteur radar déclenche la conduction de la bascule A du second moyen de synchronisation $SS_2$. Ce déclenchement est représenté par le signal $a_2$ sur le chronogramme de la figure 5. Ce signal $a_2$ a une durée égale à celle du signal $a_1$. Sur la figure 4, la bascule A du second moyen de synchronisation $SS_2$ est déclenchée par l'impulsion i22. La retombée du signal $a_2$ déclenche les bascules B et D du second moyen de synchronisation $SS_2$. Les signaux de sortie de ces bascules sont représentés en $b_2$ et $d_2$ sur le chronogramme. Le signal $e_2$ représentant les fenêtres d'autorisation est fourni par la poste 9 du second moyen monostable $SS_2$ ; il a pour équation logique :

$$e_2 = f_1 \cdot \overline{b_2} \cdot \overline{c_2.}$$

Ce signal est un signal périodique dont la fréquence correspond à la fréquence de récurrence d'un radar. Les fréquences de récurrence des différents radars sont bien entendu identiques.

Le traitement des impulsions fournies par un troisième émetteur radar est identique aux traitements qui viennent d'être décrits. Les équations logiques donnant un fonctionnement récurrent peuvent s'écrire :

$$e_i = \overline{b_i} \cdot \overline{c_i} \cdot f_j \cdot f_k,$$

les indices i, j, k étant tous différents et respectivement égaux à 1, 2, 3 dans l'exemple considéré. Le signal autorisant la démodulation et le décodage, pour le troisième émetteur radar, est représenté en $e_3$ sur le chronogramme de la figure 5.

La symétrie des équations représentant les signaux autorisant la démodulation et le décodage, pose un problème à l'initialisation du système. En effet, il est possible de se demander quel est le moyen de synchronisation qui permet l'acquisition de la première impulsion d'un émetteur radar. Avant que cette première impulsion parvienne à l'entrée du système de décodage, tous les moyens monostables sont au niveau logique 0. Il en résulte que les signaux $b_i$, $c_i$, $d_i$ (pour i allant de 1 à 3), sont au niveau logique 0. Le signal f de sortie de la porte 11 a pour équation $f = b \cdot \overline{d}$. Dans le système de décodage décrit, pour lequel on considère que l'on veut traiter jusqu'à trois émetteurs, avant que la première impulsion ne parvienne au système, on a $b_1 = b_2 = b_3 = 0$ et il en résulte que $f_1 = f_2 = f_3 = 0$, ce qui entraîne le blocage du système dans son ensemble.

Si l'on imagine par ailleurs que le système se synchronise sur trois émetteurs radars et qu'à un instant le radar qui a fourni la première impulsion au système s'interrompt momentanément, le signal $b_1$ de sortie de la bascule monostable B du premier moyen de synchronisation $SS_1$, reste au niveau logique 0 ; les signaux $d_1$ et $c_1$ restent eux aussi au niveau logique 0. Dans ce cas, le signal $f_1$ passe au niveau logique 0 et bloque tout le système.

Cette difficulté peut être surmontée par l'introduction d'un paramètre x dans les équations représentatives des signaux $e_1$, $e_2$, $e_3$. Après l'introduction de ce paramètre x, les équations de ces signaux de commande sont les suivantes :

6

$$e_1 = \overline{b_1} \cdot \overline{c_1} \cdot (f_2 + \overline{x_2}) \cdot (f_3 + \overline{x_3})$$

$$e_2 = f_1 \cdot \overline{b_2} \cdot \overline{c_2} \cdot (f_3 + \overline{x_3})$$

$$e_3 = f_1 \cdot f_2 \cdot \overline{b_3} \cdot \overline{c_3}$$

avec :

$$f_1 = \overline{d_1} \cdot (b_1 + x_2 + x_3)$$

$$f_2 = \overline{d_2} \cdot (b_2 + x_3)$$

$$f_3 = \overline{d_3} \cdot b_3.$$

Le paramètre $x = 1$ correspond à l'état excité d'une bascule monostable déclenchée en même temps que le signal c fourni par la bascule C de chacun des moyens monostables $SS_1$, $SS_2$, $SS_3$ ; ce signal présentant la durée du signal b, de sortie des bascules monostables B de chacun des moyens de synchronisation. Le chronogramme de la figure 5 montre que $x = 1$ si un signal a déjà provoqué le déclenchement de la bascule monostable B. A l'initialisation du système, $x = 0$ et on a bien :

$$e_1 = \overline{b_1} \cdot \overline{c_1} = 1 \text{ et } f_1 = 0 ;$$

il en résulte que $e_2 = e_3 = 0$.

Si par contre, le radar qui a fourni la première impulsion au système décroche, les deux autres radars étant synchronisés comme on vient de l'indiquer, il en résulte que :

$$e_1 = \overline{b_1} \cdot \overline{c_1} \cdot (f_2 + \overline{x_2}) \cdot (f_3 \cdot \overline{x_3}) = (f_2 + \overline{x_2}) \cdot (f_3 + \overline{x_3}), \text{ car } \overline{b_1} \cdot \overline{c_1} = 1$$

L'inhibition créée par le décrochage du premier moyen de synchronisation $SS_1$, due au décrochage du radar qui a fourni la première impulsion au système, disparaît donc dans des créneaux signalés par les signaux $x_2$ et $x_3$ ; il en résulte que le premier moyen de synchronisation $SS_1$ ne peut pas capter les signaux destinés aux second et troisième moyens de synchronisation $SS_2$ et $SS_3$ ; le premier moyen de synchronisation $SS_1$ ne peut pas non plus bloquer le système.

Toutes les impulsions fournies par le répondeur radar parviennent aux moyens de synchronisation qui présentent, comme on vient de le voir, trois sorties fournissant les signaux de commande $e_1$, $e_2$, $e_3$ ; ces signaux sont appliqués, comme on le verra plus loin en détail, aux moyens de démodulation et aux moyens de décodage. Ces signaux de commande permettent d'attribuer les impulsions qui parviennent à l'entrée du système, à chacun des radars émetteurs. Chaque signal de commande fournit ainsi des fenêtres d'autorisation de prise en compte des impulsions, pour chaque radar émetteur.

La figure 6 représente schématiquement les moyens de démodulation et de décodage du système de l'invention. Les moyens de démodulation sont représentés en 6 sur la figure 2, tandis que les moyens de décodage sont représentés en 7. Les moyens de démodulation comprennent une horloge 16, qui fournit des impulsions à une fréquence de 1 MHz. Ils permettent de démoduler les codes, représentés par les impulsions successives reçues du répondeur, sur leur entrée 17. Ces moyens de démodulation reçoivent par l'intermédiaire d'une porte 18 de type OU, les signaux de commande $e_1$, $e_2$, $e_3$ qui sont fournis par les moyens de synchronisation et qui présentent les fenêtres d'autorisation de traitement des impulsions des codes définies plus haut. Ces moyens de démodulation comprennent aussi des moyens de comptage 19 qui sont reliés à l'horloge 16, par l'intermédiaire d'un ensemble logique 20 dont l'entrée 17 reçoit les impulsions provenant du répondeur. Les moyens de comptage permettent de compter, par l'intermédiaire de l'ensemble logique, toutes les impulsions d'horloge fournies entre les impulsions successives reçues au cours d'une autorisation. Les moyens de comptage 19 fournissent aux moyens de décodage 7, des valeurs numériques correspondant à l'intervalle de temps qui sépare deux impulsions successives de chaque code. Les moyens de comptage 19 comprennent un premier, un deuxième et un troisième compteurs référencés respectivement $C_0$, $C_1$, $C_2$ sur la figure. Ces compteurs sont reliés respectivement à des sorties de l'ensemble logique 20 ; ils sont susceptibles d'être déclenchés successivement par trois impulsions ; deux de ces impulsions peuvent être des impulsions d'un code, tandis qu'une autre impulsion peut être une impulsion parasite fournie avec les deux impulsions du code. Bien entendu, en l'absence d'impulsion parasite, seuls les deux premiers compteurs sont déclenchés par les deux impulsions d'un code. Le compteur $C_0$ qui reçoit la première impulsion, est un compteur à débordement de capacité qui arrête son comptage lorsque son contenu a atteint une valeur limite prédéterminée. Dans un exemple de réalisation, cette valeur limite est égale à 32. Ce compteur, lorsqu'il parvient à débordement, émet un signal d'interruption IT qui permet par le signal RAZ des bascules $Q_0$, $Q_1$, $Q_2$, le comptage des deux autres compteurs $C_1$, $C_2$. Comme on le verra plus loin en détail, la valeur numérique de chaque code défini par l'intervalle de temps séparant deux impulsions provenant du répondeur, est l'une des différences entre les contenus du premier compteur $C_0$ et du deuxième compteur $C_1$, ou entre

7

les contenus du premier compteur $C_0$ et du troisième compteur $C_2$, ou entre les contenus des deuxième et troisième compteurs $C_1$, $C_2$. Cette valeur numérique du code, en l'absence d'impulsion parasite, est la différence entre les contenus des premier et deuxième compteurs $C_0$, $C_1$.

L'ensemble logique 20 reçoit sur son entrée 17, les impulsions provenant du répondeur et sur son entrée 21, les signaux de commande de synchronisation ($e_1$, $e_2$, $e_3$) provenant des moyens de synchronisation décrits plus haut. Cet ensemble logique comprend des portes 22, 23, 24, 25, 26, 27, de type ET. Il comprend également des bascules bistables $Q_0$, $Q_1$, $Q_2$. Les entrées des portes 25, 26, 27, sont reliées respectivement à l'horloge 16 et aux sorties des bascules bistables $Q_0$, $Q_1$, $Q_2$. Les entrées des portes 23, 24, sont reliées respectivement aux sorties des bascules bistables $Q_0$, $Q_1$, et à la sortie de la porte 22 qui reçoit les impulsions du répondeur radar ainsi que les signaux de commande ($e_1$, $e_2$, $e_3$). Les sorties des portes 25, 26, 27, sont reliées respectivement aux entrées de comptage des compteurs $C_0$, $C_1$, $C_2$.

La présence de trois compteurs permet en fait de tenir compte de la présence d'une impulsion parasite à proximité des deux impulsions de chaque code reçu par le répondeur. En fait, lorsqu'une impulsion parasite est présente à proximité immédiate des deux impulsions du code reçu, la présence de trois compteurs permet d'ignorer cette impulsion parasite car elle fournit, comme on le verra plus loin en détail, en se combinant avec la première impulsion du code, une information aberrante. Les compteurs $C_0$, $C_1$, $C_2$, comptent les impulsions de l'horloge 16 battant la microseconde : ce comptage ne peut avoir lieu que lorsque les bascules bistables $Q_0$, $Q_1$, $Q_2$, sont au niveau logique 1.

Les impulsions fournies par le répondeur radar, qui parviennent à l'entrée 17 de l'ensemble logique 20, sont sélectionnées par la porte 22 qui reçoit sur une autre entrée, les signaux d'autorisation de démodulation et de décodage $e_1$, $e_2$, $e_3$. Les impulsions provenant du répondeur et qui ont été sélectionnées par la porte 22, à partir des signaux de commande mentionnés plus haut, sont appliquées aux bascules $Q_0$, $Q_1$, $Q_2$, par l'intermédiaire des portes 23, 24, pour faire passer la sortie de ces bascules à l'état logique 1. Les bascules $Q_0$ et $Q_1$ commandent respectivement les portes 23, 24. A l'initialisation, les bascules $Q_0$, $Q_1$, $Q_2$ sont à l'état logique 0.

Si dans une fenêtre d'autorisation de démodulation donnée apparaissant dans un signal de commande, l'ensemble logique 20 a reçu trois impulsions, dont une impulsion parasite, cet ensemble logique fonctionne de la manière suivante : la première impulsion délivrée par la porte 22 fait basculer au niveau logique 1 la bascule $Q_0$ et il en résulte que la porte 25 est passante, ce qui autorise le démarrage du comptage du compteur $C_0$. Ce basculement de la bascule $Q_0$ permet également de rendre passante la porte 23.

La deuxième impulsion reçue par l'ensemble logique 20 n'influence plus la bascule $Q_0$ qui est déjà passée au niveau logique 1, mais la porte 23 étant passante, cette seconde impulsion fait basculer la bascule $Q_1$ qui passe au niveau logique 1. Il en résulte que la porte 26 devient passante, ce qui autorise le comptage des impulsions d'horloge par le compteur $C_1$. Le basculement de la bascule $Q_1$ rend également passante la porte 24.

La troisième impulsion ne change pas l'état des bascules $Q_0$ et $Q_1$ ; la porte 24 étant passante, la bascule $Q_2$ au niveau logique 1, ce qui rend passante la porte 27 et autorise le comptage des impulsions d'horloge, par le compteur $C_2$.

Les impulsions qui peuvent arriver après ne changent pas l'état du système. Le compteur $C_0$ qui est un compteur à débordement arrive le premier à saturation de capacité de comptage (32 dans l'exemple considéré). Le débordement du compteur $C_0$ se traduit par l'apparition du signal IT d'interruption sur une sortie de ce compteur. Ce signal est transmis au système de décodage 7 qui, comme on le verra plus loin en détail, est constitué essentiellement par un processeur ou un microprocesseur 28, associé à une mémoire 29 ; ce signal d'interruption lance la lecture des contenus des compteurs $C_0$, $C_1$, $C_2$ ; il est également appliqué sur les entrées de remise à zéro des bascules $Q_0$, $Q_1$, $Q_2$, qui sont ainsi restaurées.

Il faut remarquer qu'en l'absence d'impulsion parasite, pour un code déterminé, seules deux impulsions parviennent à l'entrée 17 de l'ensemble logique 20. Dans ce cas, le compteur $C_0$ arrive à débordement et le compteur $C_1$ compte un nombre $X_1$ d'impulsions d'horloge, tandis que le compteur $C_2$ n'est pas déclenché. Dans ce cas normal, le code défini par deux impulsions d'horloge séparées par un intervalle de temps prédéterminé, est transformé en une valeur numérique ; dans l'exemple choisi où le débordement du compteur $C_0$ est réalisé par le comptage de 32 impulsions d'horloge, le code est :

$$c = 32 - X_1$$

Dans le cas où trois impulsions, dont une impulsion parasite, sont parvenues à l'entrée 17 de l'ensemble logique 20, les trois compteurs fonctionnent. Si l'on désigne par $X_1$ et $X_2$ les contenus des compteurs $C_1$ et $C_2$ à l'instant du débordement du compteur $C_0$, il est possible d'obtenir trois valeurs numériques différentes, $c_1$, $c_2$, $c_3$, correspondant éventuellement à un code attendu. Ces valeurs numériques sont les suivantes :

$$c_1 = 32 - X_1$$

$$c_2 = 32 - X_2$$

$$c_3 = X_1 - X_2$$

Quelle que soit la position de l'impulsion parasite qui apparaît à proximité des deux impulsions du code attendu, cette impulsion va introduire un code faux avec chaque impulsion du code réel ; parmi les trois valeurs $c_1$, $c_2$, $c_3$, une seule correspond au code réel attendu. L'une des opérations effectuées par les moyens de décodage consiste comme on le verra plus loin en détail, à éliminer les codes aberrants et à corréler les codes utiles.

En fait, si l'impulsion parasite parvient avant les deux impulsions du code attendu, la valeur numérique exacte correspondant au code attendu est :

$$c_3 = X_1 - X_2$$

Si l'impulsion parasite arrive après les deux impulsions du code attendu, la valeur numérique exacte correspondant au code attendu, est donnée par $c_1 = 32 - X_1$.

Enfin, si l'impulsion parasite est située entre les deux impulsions du code attendu, la valeur numérique exacte correspondant au code attendu est donnée par la formule :

$$c_2 = 32 - X_2$$

Bien entendu, la valeur 32 correspond à un exemple de réalisation pour lequel le débordement du compteur $C_0$ se fait pour 32 impulsions d'horloges. Ce nombre d'impulsions d'horloge pourrait être différent.

En fait, le signal de débordement IT du compteur $C_0$ est un signal d'interruption qui déclenche la lecture des contenus $X_1$ et $X_2$ des compteurs $C_1$ et $C_2$. Cette lecture est commandée par les signaux $LT_1$ et $LT_2$ fournis par le microprocesseur qui commande également la remise à zéro des compteurs $C_1$ et $C_2$ en leur appliquant les signaux $RAZT_1$ et $RAZT_2$.

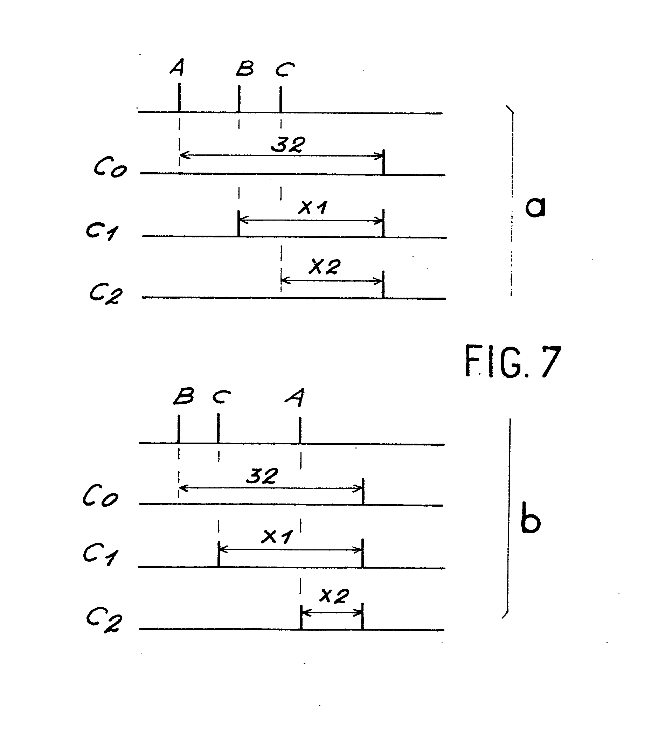

La figure 7 permet de mieux comprendre le choix que doit faire le microprocesseur pour sélectionner dans les valeurs numériques fournies par les compteurs, la valeur numérique qui correspond aux codes attendus.

Sur cette figure, on a représenté en a le cas où une impulsion parasite A est fournie aux moyens de démodulation, avant les deux impulsions B et C d'un code attendu. Le compteur $C_0$ parvient à débordement lorsqu'il a compté 32 impulsions d'horloge, dans l'exemple de réalisation considéré. On suppose que le temps de comptage du compteur $C_0$, pour compter ces 32 impulsions, est supérieur à l'intervalle de temps qui sépare l'impulsion parasite A, de l'impulsion C du code. Ce compteur est déclenché par la première impulsion reçue par les moyens de démodulation, c'est-à-dire par l'impulsion parasite A. Le compteur $C_1$ est déclenché par l'impulsion B du code et son comptage est arrêté lorsque le compteur $C_0$ arrive à débordement. Ce compteur compte donc un nombre $X_1$ d'impulsions d'horloge. Le compteur $C_2$ est déclenché par la troisième impulsion C qui est une impulsion du code et son comptage s'arrête à l'instant du débordement du compteur $C_0$ ; la valeur numérique de son contenu est alors $X_2$. Les valeurs numériques qui peuvent alors correspondre aux intervalles de temps qui séparent deux impulsions sont alors $c_1 = 32 - X_1$, $c_2 = 32 - X_2$ et $c_3 = X_1 - X_2$. Dans ce cas, la valeur exacte du code est :

$$c_3 = X_1 - X_2$$

Le diagramme b représente le cas où l'impulsion parasite A survient après les deux impulsions B et C d'un code. Comme dans les cas précédents, le compteur $C_0$ est déclenché par la première impulsion qu'il reçoit, c'est-à-dire par l'impulsion B du code. Ce compteur compte 32 impulsions jusqu'à son débordement de capacité. Le compteur $C_1$ est déclenché par la deuxième impulsion C du code et compte $X_1$ impulsions d'horloge jusqu'à l'instant où le compteur $C_0$ arrive à débordement. Enfin, le compteur $C_2$ est déclenché par la troisième impulsion, c'est-à-dire par l'impulsion parasite A. Ce compteur compte $X_2$ impulsions d'horloge, jusqu'à l'instant du débordement du compteur $C_0$. Les valeurs numériques représentatives de codes éventuels, sont :

$$c_1 = 32 - X_1, \quad c_2 = 32 - X_2 \text{ et } c_3 = X_1 - X_2$$

Dans ce cas, la valeur numérique exacte du code attendu est $c_1 = 32 - X_1$.

Le traitement d'une deuxième impulsion parasite réclamerait un quatrième compteur $C_3$ ; le travail à effectuer serait semblable et on obtiendrait au maximum six codes à examiner.

On va maintenant expliquer les traitements effectués par les moyens de décodage 7, constitués par une logique qui peut être un microprocesseur 28 associé à une mémoire 29. Ce microprocesseur reçoit sur ses entrées, d'une part les signaux de commande $e_1$, $e_2$, $e_3$ définissant les fenêtres d'autorisation, de démodulation et de décodage des ordres provenant des différents émetteurs et, d'autre part, les valeurs numériques des contenus des compteurs $c_0$, $c_1$, $c_2$. Ce microprocesseur compare, comme on le verra plus loin en détail, pour chaque code, les valeurs numériques des différences des contenus des compteurs, avec des valeurs numériques de référence enregistrées dans la mémoire 29, et il sélectionne les valeurs numériques correspondant aux codes présents dans chaque ordre émis.

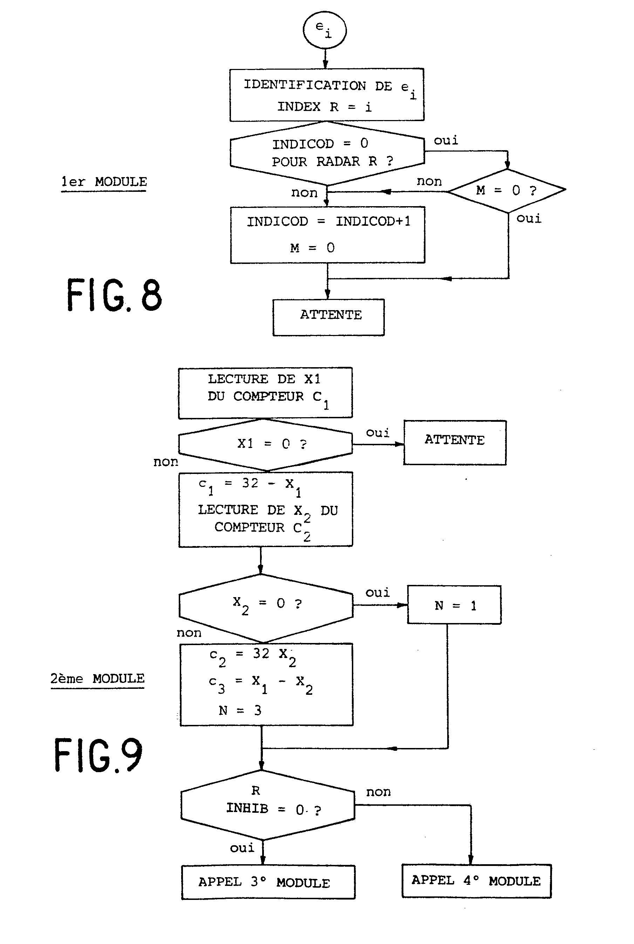

Les figures 8 à 11 permettent de mieux comprendre le fonctionnement des moyens de décodage 7. Ces figures représentent les organigrammes essentiels des microprogrammes qui sont enregistrés dans la mémoire 29 du microprocesseur 28 et qui permettent de décoder les valeurs numériques provenant des moyens de démodulation 6. Comme on le verra plus loin en détail, ces différents microprogrammes concernent respectivement l'exploitation des signaux de commande ($e_1$, $e_2$, $e_3$) provenant des moyens de synchronisation, l'exploitation des signaux d'interruption IT fournis par le premier compteur $C_1$ des moyens de démodulation, le contrôle de la bonne qualité de continuité des codes émis par un radar, et le décodage proprement dit des ordres reçus par le système.

Les moyens de démodulation ayant transformé les codes en valeurs numériques, le décodage de ces codes va être effectué par le microprocesseur qui dispose pour chaque radar, dans l'exemple considéré, d'un temps au moins égal au quart de la période de récurrence. Avant le décodage des ordres, le microprocesseur devra effectuer certains traitements qui seront décrits plus loin en détail, car il ne faut pas mélanger les codes des ordres issus de radars différents. Les informations à traiter et en particulier les valeurs numériques issues des compteurs, doivent être rangées dans des zones de mémoire affectées respectivement à chacun des émetteurs radar. Pour cela, les moyens de décodage doivent être capables à chaque instant, de ranger les valeurs numériques des codes dans des zones précises de la mémoire ; ils doivent aussi être capables de rechercher dans quelles zones de mémoire sont situées les informations nécessaires au traitement de ces valeurs numériques.

En se reportant à la figure 6, on voit que le décodage est lié à la démodulation qui, elle-même est liée à la présence d'une autorisation issue des moyens de synchronisation. Ces autorisations sont fournies par les signaux de commande $e_1$, $e_2$, $e_3$ ; elles sont exclusives l'une de l'autre. L'identification des fenêtres d'autorisation, dans chaque signal de commande, permet l'affectation des codes à chaque émetteur, en temps réel. C'est la raison pour laquelle le microprocesseur 28 reçoit les trois signaux de commande individuellement. A l'apparition d'une fenêtre d'autorisation dans un signal de commande, le microprocesseur affecte une adresse dans sa mémoire et lui fait correspondre une zone de mémoire dans laquelle il va travailler pour traiter ce signal. En fait, si l'on désigne par R les valeurs d'index qui servent à repérer ces zones, ces valeurs vont de 1 à 3 dans l'exemple de réalisation considéré ; elles correspondent en fait à un numéro que l'on attribue à chacun des émetteurs radar pour les repérer à partir des signaux reçus par le système de décodage.

Lorsqu'apparaît le signal d'interruption IT correspondant au débordement du compteur $C_0$, le microprocesseur commande la lecture des contenus des compteurs $C_1$ et $C_2$, en émettant vers ces compteurs les signaux $LT_1$ et $LT_2$, puis remet ces compteurs à zéro grâce aux signes $RAZT_1$ et $RAZT_2$. Ensuite, le microprocesseur calcule les valeurs numériques $c_1$, $c_2$, $c_3$ susceptibles d'être affectées à un code attendu. Une corrélation est alors effectuée entre ces valeurs numériques et des valeurs numériques de référence, correspondant aux valeurs numériques des codes attendus pour chaque ordre (deux ordres dans l'exemple considéré).

Les organigrammes des figures 8 à 11 vont permettre de mieux comprendre l'exploitation d'un signal de commande $e_i$ (i allant de 1 à 3 dans l'exemple considéré), le traitement des contenus des compteurs $C_1$ et $C_2$, l'initialisation du traitement et le suivi d'un ordre reçu d'un radar, la corrélation des codes et la sortie d'un ordre, l'élimination des informations mal corrélées. Avant d'expliquer le déroulement des opérations apparaissant dans ces organigrammes, il est nécessaire de préciser l'organisation de la mémoire du microprocesseur. Dans cette mémoire, certaines informations sont générales, quel que soit le radar qui a émis des ordres en direction du système de décodage, d'autres informations sont nécessaires au fonctionnement du microprocesseur. Toutes ces informations sont rangées dans une zone commune de la mémoire 29. Les informations particulières à un radar sont rangées dans une zone spécifique accessible grâce à l'index R mentionné plus haut. Ces zones de mémoires ne sont pas représentées sur la figure 6 car leur emplacement dépend du choix de l'homme de l'art.

La zone commune de la mémoire 29 contient les informations suivantes :

la valeur numérique du code d'interrogation INT. Comme on l'a indiqué plus haut, des codes d'interrogation sont mélangés aux codes qui définissent un ordre ;

les deux séries de codes constituant les deux ordres dans l'exemple considéré. Ces deux séries de codes représentent, pour deux ordres répétés m fois, un nombre total de mots égal à $2m (2n_1 + n_2)$ ;

une valeur maximale IMax. du rang de chaque code dans chaque ordre. Un ordre étant défini par une pluralité de codes, il est en effet nécessaire, pour décoder cet ordre, de connaître le rang de chaque code dans chaque ordre, le premier code d'un ordre ayant par exemple le rang 1 ;

la valeur maximale Max. du nombre d'absences (les absences étant notées ABS) à partir de laquelle un radar doit être abandonné. En effet, dans le cas où un ordre a commencé à être repéré par les moyens de synchronisation, de démodulation et de décodage et qu'à partir d'un instant les codes de cet ordre ne sont plus reconnus, il est nécessaire d'essayer le plus rapidement possible de recommencer sa démodulation. Pour cela, il faut un critère autorisant la remise à zéro du système. Ce critère est précisément Max. ;

le nombre maximal e d'erreurs admises dans un ordre exécutable. Ce nombre permet d'admettre la présence d'erreurs parmi certains codes d'un ordre reconnu ;

l'indice R mentionné plus haut qui permet d'atteindre la zone spécifique du radar ayant émis des codes à traiter ;

le nombre N de codes démodulés dans chaque fenêtre d'autorisation $e_i$. En fait, comme on l'a vu précédemment, ce nombre N peut être 1 ou 3 ; il dépend de la présence ou de l'absence d'une impulsion parasite près des deux impulsions de chaque code ;

les mémoires de travail utilisées pour la détermination des valeurs numériques $c_1$, $c_2$, $c_3$ décrites plus haut et pour la comparaison avec des valeurs numériques de référence ;

la valeur $n_2$ des répétitions du code d'interrogation. Cette valeur $n_2$ permet en fait de s'assurer du bon suivi d'un radar par le système de synchronisation.

Les zones spécifiques de la mémoire 29 présentent en fait trois zones identiques, attribuées respectivement à chacun des radars. Chacune de ces zones comprend les éléments logiques suivants :

CINT qui désigne un compteur des codes d'interrogation INT transmis par le répondeur radar, au système de décodage,

A(1) qui désigne l'ancien compteur du nombre de codes corrélés pour le décodage de l'ordre 1,

N(1) qui désigne le nouveau compteur du nombre de codes corrélés pour le décodage de l'ordre 1,

A(2) qui désigne l'ancien compteur du nombre de codes corrélés pour le décodage de l'ordre 2,

N(2) qui désigne le nouveau compteur du nombre de codes corrélés pour le décodage de l'ordre 2,

ABS qui désigne un compteur du nombre d'absences de codes,

INDICOD qui désigne le rang du code en cours de traitement dans le système de décodage, au cours du décodage d'un ordre,

INDIC, INHIB, M qui désignent des indicateurs logiques qui seront décrits plus loin.

La description des organigrammes des figures 8 à 11 permettra maintenant de mieux comprendre comment se combinent les informations qui viennent d'être mentionnées, pour assurer le décodage des ordres émis par trois émetteurs radars, dans l'exemple de réalisation considéré.

La figure 8 est un organigramme qui permet de mieux comprendre la façon dont le microprocesseur traite l'arrivée d'un signal de commande $e_i$ à l'entrée du microprocesseur. En fait, dans l'exemple de réalisation considéré, cet organigramme représente l'exploitation de l'un des signaux d'autorisation $e_1$, $e_2$, $e_3$ (i pouvant être égal à 1 ou 2 ou 3). Cet organigramme correspond à un premier module programmé dans la mémoire du microprocesseur. L'arrivée d'un signal d'autorisation $e_1$, $e_2$ ou $e_3$ (et d'une manière générale $e_i$) provoque une interruption dans le mciroprocesseur. Ce premier module est chargé de reconnaître s'il s'agit d'un signal $e_1$, $e_2$ ou $e_3$ ; il permet alors d'attribuer la valeur de i (i = 1 ou 2 ou 3) à l'index R défini plus haut. La valeur de l'index R correspond à la valeur de l'indice i du signal d'autorisation $e_i$. Cet indice est connu puisque l'on connaît le moyen de synchronisation $SS_1$, $SS_2$ ou $SS_3$ qui fournit un signal d'autorisation.

L'émetteur radar pour lequel le système de décodage va intervenir, étant identifié, il est alors nécessaire de rechercher dans la zone spécifique de la mémoire 29 qui correspond au numéro de cet émetteur radar, deux informations : INDICOD et M. Ces deux informations, comme on l'a indiqué plus haut concernent respectivement le rang du code atteint par le système de décodage au cours du décodage d'un ordre, et un indicateur logique qui sera décrit plus loin.

Deux cas peuvent alors se présenter :

si INDICOD = 0, c'est qu'aucun ordre n'est en cours de décodage pour le radar considéré, car INDICOD = 0 indique qu'aucun code n'a encore été reçu par le système. Ceci peut aussi résulter de l'initialisation du système après la dernière récurrence ayant permis le décodage d'un ordre. L'indicateur M est en fait un indicateur qui présente le niveau logique 0 lorsqu'aucune corrélation n'est trouvée avec un code possible, et qui présente le niveau logique 1 lorsqu'une telle corrélation est trouvée, avec un code possible. Cet indicateur est passé au niveau logique 1 par le quatrième module qui sera décrit à la figure 11. Lorsque l'indicateur M est passé au niveau logique 1 à la suite d'une commande provenant du quatrième module, le premier module incrémente d'une unité la valeur de INDICOD et remet à zéro l'indicateur logique M ; le microprocesseur est alors en attente d'une autre interruption provoquée par une autre fenêtre d'autorisation de modulation et de décodage, dans un signal de commande $e_i$ ;

si INDICOD est différent de zéro, sa valeur est incrémentée d'une unité et l'indicateur M est remis à zéro. Cela indique qu'un ordre est bien en cours de décodage.

La figure 9 est l'organigramme d'un deuxième module inscrit dans la mémoire 29 ; ce deuxième module permet de calculer les valeurs numériques des codes.

Le signal d'interruption IT est transmis par le premier compteur $C_0$ au microprocesseur, lorsque ce compteur arrive à débordement pour chaque fenêtre d'autorisation présente dans un signal de commande. Ce débordement signifie aussi que de compteur est remis à zéro. Dans l'exemple de réalisation choisi, cela correspond à un comptage de 32 impulsions d'horloge. Il est donc inutile de lire le contenu du compteur $C_0$. Le deuxième module dont l'organigramme est représenté sur la figure 9, permet tout d'abord de lire le contenu $X_1$ du compteur $C_1$ (ce compteur étant remis à zéro par le signal $RAZT_1$). Si la valeur $X_1$ du contenu de ce compteur est nulle ($X_1 = 0$), c'est qu'il n'est arrivé qu'une impulsion parasite isolée qui a seulement déclenché le compteur $C_0$ ; il n'y a donc pas de code à considérer et le microprocesseur repasse en attente.

Si la valeur du contenu du compteur $C_1$ est différente de 0, le deuxième module de microprogramme permet de calculer le code $c_1 = 32 - X_1$, puis de lire le contenu du compteur $C_2$. Si le contenu $X_2$ du

compteur $C_2$ est égal à 0, c'est qu'il n'est arrivé que deux impulsions correspondant à un code (la première a déclenché $C_0$ et la deuxième $C_1$). Cela est enregistré en faisant passer l'indicateur N à la valeur 1.

Si le contenu $X_2$ du compteur $C_2$ n'est pas nul, c'est qu'une impulsion parasite s'est mêlée aux deux impulsions d'un code. Le deuxième module permet alors de calculer les codes possibles, les valeurs numériques $C_2 = 32 - X_2$ et $C_3 = X_1 - X_2$. Dans ce cas, le nombre N de codes démodulés, parmi lesquels se trouve le code attendu, est égal à 3. Le fait de mettre l'indicateur N à 3, indique que trois codes sont disponibles. Jusqu'ici le deuxième module a travaillé dans la zone commune de la mémoire 29. Il va ensuite permettre de chercher dans la zone spécifique référencée par l'index de R (qui a été attribué par le premier module), l'indicateur logique INHIB.

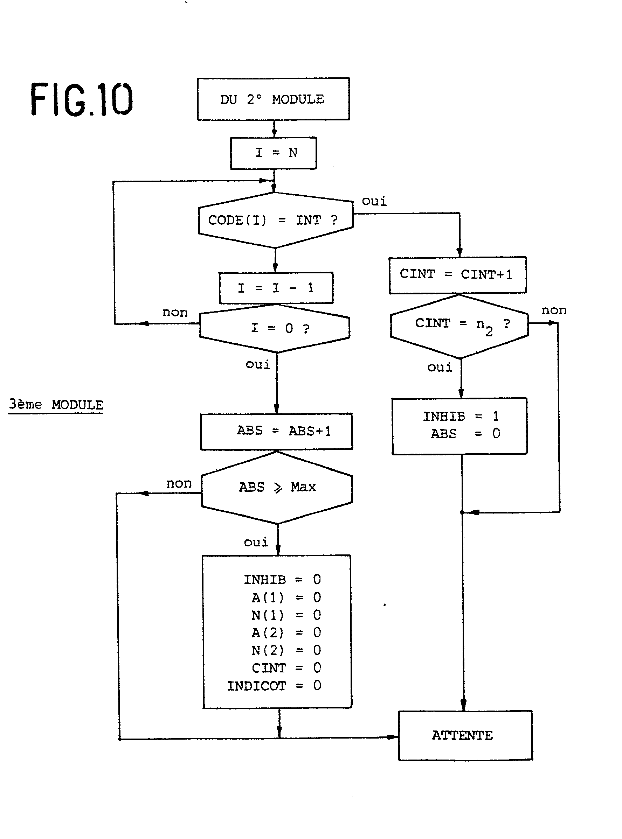

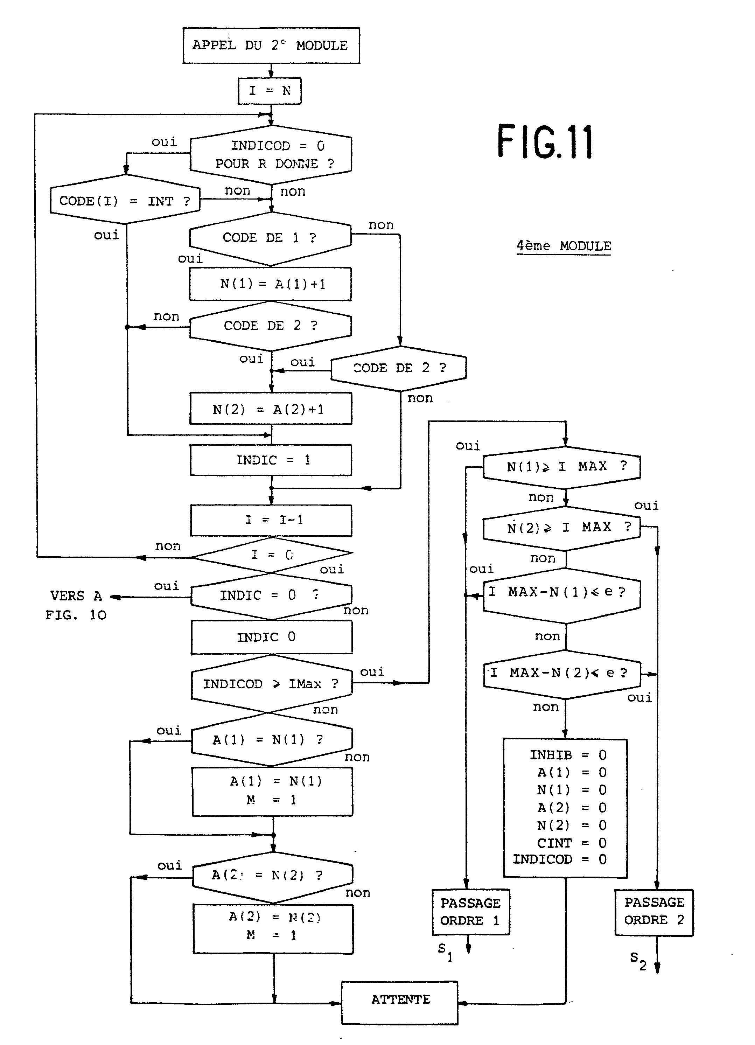

si INHIB = 0, on convient que l'on se trouve en période de confirmation de la poursuite du radar dont le numéro est exprimé par l'index R. Dans ces conditions, le deuxième module permet d'appeler le troisième module dont l'organigramme sera décrit sur la figure 10 ; ce troisième module permet de contrôler le bon suivi d'un radar ;

si l'indicateur logique INHIB est différent de 0, le radar correspondant à l'index R défini par le premier module est bien confirmé et un ordre en est bien recevable. Dans ce cas, c'est le quatrième module (de décodage des ordres), dont l'organigramme est représenté sur la figure 11, qui est appelé.

La figure 10 est un organigramme correspondant au troisième module permettant le contrôle du bon suivi d'un radar. Ce troisième module est appelé, comme on l'a vu plus haut, par le deuxième module. Il travaille pour un radar particulier indiqué par la valeur de l'index R préparé dans la zone commune, par le premier module. Ce troisième module permet de vérifier que l'on est bien en état de poursuite d'un radar qui interroge régulièrement le répondeur. Ce troisième module compare les codes reçus aux codes d'interrogation INT normalement attendus du répondeur radar. En fait, on va comparer le code ou les trois codes reçus, avec le code d'interrogation (en faisant code (I) = INT ?, I étant un index variant entre N et 0). Si ce code ou l'un des trois codes est égal au code d'interrogation INT (réponse OUI à la question code (I) = INT ?) le troisième module incrémente d'une unité le compteur d'interrogation CINT (en faisant CINT = CINT + 1), puis compare la valeur du contenu de ce compteur avec la valeur $n_2$ du nombre de codes d'interrogation qui peuvent être présents dans un ordre (en faisant CINT = $n_2$ ?).

Si le contenu du compteur d'interrogation est égal à $n_2$, c'est que le radar traité est considéré comme valable pour transmettre des ordres ; l'indicateur INHIB est donc passé au niveau logique 1. Le compteur d'absences ABS est alors mis à zéro, puisque l'on est en présence d'un radar utile et que, jusqu'à présent, aucune absence de codes d'interrogation n'a été constatée. A la récurrence suivante, le deuxième module mettra alors en œuvre le quatrième module à la place du troisième, puisqu'on est en présence d'un radar qui peut émettre un ordre.

Si le contenu du compteur d'interrogation n'est pas égal à $n_2$, le système est mis en attente d'un code.

Si aucun des codes reçus n'est égal au code d'interrogation INT ? (réponse NON à la question CODE(I) = INT), le compteur d'absences ABS est incrémenté d'une unité. Dès que le compteur d'absence ABS atteint la valeur Max. (ABS ⩾ Max.) définie plus haut, le nombre d'absences de codes d'interrogation est intolérable. Le compteur d'interrogation CINT est mis à zéro, l'indicateur logique INHIB est lui-même confirmé à zéro et les anciens et nouveaux compteurs pour l'ordre 1 et pour l'ordre 2, désignés respectivement par A(1), N(1), A(2), N(2), sont mis à zéro. INDICOD est lui-même mis à zéro. Après cela, le microprocesseur est mis en attente.

Si le nombre d'absences de codes d'interrogation n'a pas atteint la valeur Max, le système est mis en attente d'un code.

La figure 11 est un organigramme correspondant au quatrième module permettant le décodage proprement dit des ordres. Ce quatrième module agit, comme on l'a vu plus haut, sur appel du deuxième module, dès que le troisième module a confirmé la qualité de la poursuite d'un radar repéré par l'index R. Le rôle de ce quatrième module est de surveiller l'apparition du premier code d'un ordre et, à partir de là, de décoder entièrement l'ordre, récurrence par récurrence, jusqu'à la décision finale de passage d'un ordre, quand la valeur « INDICOD » a atteint sa valeur maximale Imax.

Les opérations effectuées par ce module débutent par une boucle démarrant sur la valeur de l'indice I. Au départ, l'indice I a pour valeur N, qui a été déterminée égale à 1 ou à 3 par le module n° 2, en fonction du nombre de codes démodulés pour une récurrence donnée (1 code ou 3 codes pour chaque fenêtre d'autorisation, selon qu'il y a ou non une impulsion parasite).

Si INDICOD (rang d'un code reçu d'un Radar repéré par R) est égal à 0, c'est qu'aucun ordre n'a été reçu jusque là et que le système n'a éventuellement reçu que des codes d'interrogation INT. La probabilité de passage d'un ordre étant très faible, le fonctionnement normal du système de décodage correspond à la réception de codes d'interrogation INT. Dans le cas où INDICOD pour un radar, est égal à 0, on compare donc le code reçu par le système de décodage (CODE (I)) avec le code d'interrogation INT.

Si le code reçu est un code d'interrogation (réponse OUI à la question, code CODE(I) = INT ?), l'indicateur logique INDIC est mis à 1 pour signifier, pour la suite du traitement, qu'il n'y a pas eu absence du radar R pour cette récurrence. Au cas où le code reçu proviendrait d'une impulsion parasite, l'indice I (pouvant prendre les valeurs 1 ou 3) est décrémenté d'une unité et la boucle est à nouveau parcourue, jusqu'à ce que I = 0.

Si le code reçu n'est pas un code d'interrogation (réponse NON à la question CODE I = INT ?), le code reçu est comparé au code normalement attendu pour l'ordre 1 (code de 1 ?) pour cette récurrence. Si le code reçu pour l'ordre 1 correspond à un code attendu, le nouveau compteur N(1) pour cet ordre qui définit le rang du code reçu pour cet ordre, est fait égal à la valeur de l'ancien compteur A(1) majoré d'une unité. Cette opération se traduit en fait par l'expression N(1) = A(1) + 1. On compare aussi le code reçu avec le code attendu pour l'ordre 2 (code de 2 ?). Comme précédemment, lorsque le code reçu correspond au code attendu pour cet ordre, on établit l'égalité N(2) = A(2) + 1 qui signifie que le contenu du nouveau compteur pour l'ordre 2 est égal au contenu de l'ancien compteur pour cet ordre, incrémenté d'une unité. Dans ce cas aussi, l'indicateur logique INDIC est mis au niveau logique 1.

Si le code reçu ne correspond à aucun code attendu par les deux ordres, (réponse NON aux questions code de 1 ?, code de 2 ?) l'indice I pouvant prendre les valeurs 1 ou 3 est décrémenté de une unité, et la boucle F est parcourue à nouveau, jusqu'à I = 0.

Après le ou les parcours de la boucle F qui vient d'être décrite, lorsque I = 0, les opérations suivantes sont effectuées :

Si l'indicateur logique INDIC est égal à 0, c'est qu'il n'y a aucune corrélation soit avec un code d'interrogation INT, soit avec les codes attendus pour l'ordre 1 ou l'ordre 2. On en conclut donc qu'il y a une absence de code provenant du radar repéré par R. On se connecte alors en A sur le troisième module, sans aller au-delà dans le parcours de l'organigramme du quatrième module. Le troisième module va alors traiter l'absence comme on l'a indiqué précédemment et s'il le faut, remettre tous les paramètres à zéro et parmi eux, l'indicateur logique INHIB du radar repéré par R.

Si au contraire, l'indicateur logique INDIC est différent de zéro (réponse NON à la question INDIC = 0 ?), il y a eu au moins une corrélation entre un code reçu et un code attendu et on met l'indicateur logique INDIC à zéro. Pour identifier si un ordre décodé peut être passé, on compare INDICOD avec IMax (INDICOD étant le rang atteint dans les codes d'un ordre, au cours du décodage). Si INDICOD n'est pas égal à IMax, (réponse NON à la question INDICOD $\geqslant$ IMax ?), on compare les anciens contenus des compteurs (A(1), A(2)) avec les nouveaux contenus de ces compteurs (N(1), N(2)), pour chaque ordre. En l'absence de corrélation, les anciens et nouveaux contenus des compteurs pour chaque ordre ont la même valeur (réponses OUI aux questions A(1) = N(1) ? et A(2) = N(2) ?). Si c'est le cas pour les deux ordres, c'est que le code reçu était un code d'interrogation INT, sinon l'indicateur logique INDIC aurait été nul. Le système passe alors en attente. Si les anciens et nouveaux contenus des compteurs sont inégaux (réponse NON aux questions A(1) = N(1) ? ou A(2) = N(2) ?), on met à jour les anciens contenus de ces compteurs en faisant A(1) = N(1) pour l'ordre 1 et A(2) = N(2) pour l'ordre 2, et on positionne le marqueur logique M au niveau logique 1. On passe ensuite en attente.

Si l'indice ou rang INDICOD du code reçu est égal à l'indice maximum IMax (réponse OUI à la question INDICOD IMax), c'est qu'un ordre est complètement reçu. Le quatrième module va alors vérifier, pour chacun des ordres, si le contenu N(1) du nouveau compteur pour l'ordre 1 est égal à l'indice maximum ou rang IMax. S'il y a égalité, c'est que l'ordre 1 est complètement décodé et que le passage de cet ordre peut être commandé par l'apparition du signal $S_1$ sur une sortie du microprocesseur. Si ce n'est pas le cas, le même processus est effectué pour l'ordre 2 : on vérifie si le contenu N(2) du nouveau compteur pour l'ordre 2 est égal à l'indice maximum IMax. S'il y a égalité, l'ordre 2 est passé, ce qui se traduit par l'apparition d'un signal $S_2$ sur une autre sortie du microprocesseur. Ces deux cas sont bien entendu des cas parfaits. Si aucune de ces égalités n'est vérifiée (réponses NON aux questions N(1) $\geqslant$ IMax ou N(2) $\geqslant$ IMax) entre les contenus des nouveaux compteurs pour chaque ordre et l'indice maximum IMax, on compare la différence IMax-$N_1$ avec une tolérance prédéterminée e. Si la différence IMax — N(1) $\leqslant$ e, l'ordre 1 est passé. De la même manière, on vérifie l'inégalité IMax — N(2) $\leqslant$ e. Si cette inégalité est satisfaite, l'ordre 2 est passé. Si ces inégalités sont insatisfaites (réponses NON aux questions IMax-N(1) $\leqslant$ e et IMax-N(2) $\leqslant$ e) et le système effectue alors une remise à zéro complète de la zone concernant le radar repéré par R, et repasse en position d'attente. Cette remise à zéro complète se traduit par les expressions suivantes : INHIB = 0, A(1) = 0, N(1) = 0, A(2) = 0, N(2) = 0, CINT = 0, INDICOD = 0.

Le système qui vient d'être décrit offre une protection idéale contre les ordres parasites qui pourraient être transmis par un intrus voulant agir sur les moyens télécommandés embarqués à bord du mobile. Le fait de transmettre un ordre, simultanément à partir de plusieurs radars, assure une exploitation très sûre de cet ordre par les moyens télécommandés embarqués à bord de l'engin, en diminuant la probabilité de panne à l'émission. Le système de décodage exclut les pertes de temps consistant à traiter des signaux inutiles. Rien ne différencie le fonctionnement des radars dans leur rôle de localisation d'un engin ou dans leur rôle d'ordre de télécommande puisque les codes d'interrogation sont traités comme les ordres de télécommande. En l'absence d'ordre de télécommande, chaque radar émet déjà des codes d'interrogation en permanence et, lorsqu'un ordre est passé, il est exploité à bord de l'engin en déplacement, dans un temps très court du fait de la fréquence de récurrence élevée. Il est difficile dans ces conditions d'imaginer qu'un intrus puisse avoir une réaction assez rapide pour brouiller l'ordre passé.

En cas d'absence d'émission de l'un des radars pendant une récurrence, le compteur d'absence est incrémenté ; deux cas sont alors à considérer :

le radar est en localisation et rien ne différencie le code d'une récurrence avec le code d'une autre récurrence ; ces codes sont traités normalement ;

# 0 099 277

si un ordre est en cours d'émission, il risque de se produire un décalage entre l'indice du code reçu et l'indice du code attendu. Dans ces conditions, le compteur d'absence ABS s'incrémente et remet à zéro la zone de mémoire consacrée au radar fautif. L'indicateur logique INHIB étant remis à zéro, le deuxième module appelle le troisième module, au lieu d'appeler le quatrième module, et permet une réinitialisation rapide du décodage.

Le système qui vient d'être décrit présente une conception hybride puisque les moyens de synchronisation sont câblés, alors que les moyens de décodage sont microprogrammés. La réalisation pourrait être entièrement basée sur l'exploitation programmée de compteurs, ce qui permettrait une surveillance très vigoureuse de la période de récurrence des codes incidents.

## Revendications

1. Système de décodage d'ordres transmis par un ensemble d'émetteurs impulsionnels, cycliques et synchrones, chaque ordre étant constitué par plusieurs codes apparaissant à fréquence de récurrence fixe, sur un ensemble de plusieurs périodes successives, chaque code comprenant au moins deux impulsions et les codes successifs d'un ordre étant définis par modulation des intervalles de temps qui séparent les impulsions de chaque code, chaque ordre pouvant être émis identiquement par un ou plusieurs émetteurs présentant des décalages de phase d'émission prédéterminés, le système comprenant :

des moyens de synchronisation (8) recevant toutes les impulsions des émetteurs et fournissant sur des sorties, des signaux ($e_1$, $e_2$, ..., $e_n$) d'autorisation de traitement, pour des moyens de démodulation (6) et de décodage (7), les moyens de synchronisation (8) comprenant des moyens monostables ($SS_1$, $SS_2$, ..., $SS_i$, ..., $SS_n$) en nombre égal à celui des émetteurs à traiter, ces moyens étant reliés en série et rebouclés les uns sur les autres, un moyen monostable ($SS_i$) fournissant sur une sortie un signal d'autorisation ($e_i$) en synchronisme avec un émetteur, la durée de conduction du moyen monostable étant supérieure à celle du code de durée la plus élevée dans les codes des ordres, les autres moyens monostables fournissant respectivement et de la même manière, des signaux d'autorisation, en synchronisme respectivement avec les autres émetteurs, chaque moyen monostable inhibant le déclenchement des autres moyens monostables, au moins pendant la durée de chaque signal d'autorisation qu'il fournit,

des moyens de démodulation (6) recevant ces autorisations et les impulsions, et fournissant des valeurs numériques successives correspondant respectivement auxdits intervalles de temps,

des moyens de décodage (7) reliés aux moyens de démodulation (6) et aux moyens de synchronisation (8), pour comparer les valeurs numériques reçues des moyens de démodulation avec des valeurs numériques de référence enregistrées, et en cas de corrélation entre ces valeurs, pour fournir sur des sorties spécifiques, des signaux ($S_1$, $S_2$, ...) correspondant aux ordres décodés.

2. Système de décodage selon la revendication 1, caractérisé en ce que les moyens de démodulation (6) comprennent une horloge (16) reliée à des moyens de comptage (19) par l'intermédiaire d'un ensemble logique (20) qui reçoit, d'une part sur une entrée (17), toutes les impulsions provenant des émetteurs, et, d'autre part, sur une autre entrée (21), les signaux d'autorisation ($e_i$) fournis par les moyens de synchronisation (8), les moyens de comptage (19) permettant de compter, par l'intermédiaire de l'ensemble logique (20), toutes les impulsions d'horloge (16) fournies entre les impulsions successivement reçues, les moyens de comptage (19) fournissant aux moyens de décodage (7), des valeurs numériques correspondant à ces comptages.

3. Système de décodage selon la revendication 2, caractérisé en ce que les moyens de comptage (19) comprennent un premier et un deuxième compteurs ($C_0$, $C_1$) reliés respectivement à des sorties de l'ensemble logique (20) et susceptibles d'être déclenchés respectivement à partir de deux impulsions, le premier compteur ($C_0$) qui reçoit la première impulsion étant un compteur à débordement de capacité qui arrête son comptage ainsi que le comptage de l'autre compteur par un signal d'interruption (IT), lorsqu'il parvient à débordement, la valeur numérique du code étant la valeur numérique de la différence entre les contenus des premier ($C_0$) et deuxième ($C_1$) compteurs, en l'absence d'impulsions parasites.

4. Système de décodage selon la revendication 3, caractérisé en ce que les moyens de comptage (19) comprennent autant de compteurs supplémentaires qu'il est prévu de traiter d'impulsions parasites pouvant brouiller un code utile.

5. Système de décodage selon la revendication 4, caractérisé en ce que les moyens de décodage (7) comprennent un microprocesseur (28) relié à une mémoire (29) et recevant sur des entrées, d'une part les signaux d'autorisation ($e_i$) provenant des moyens de synchronisation (8), et d'autre part, les valeurs numériques des contenus des compteurs ($C_0$, $C_1$, ...), le microprocesseur (28) comparant pour chaque code, les valeurs desdites différences avec des valeurs numériques de référence enregistrées dans la mémoire et correspondant aux codes attendus dans chaque ordre émis.

6. Système de décodage selon la revendication 5, caractérisé en ce que les moyens (7) de décodage sont aptes à traiter simultanément des ordres issus d'émetteurs différents.

14

## Claims

1. A system for decoding instructions transmitted by a group of pulse, cyclic and synchronous transmitters, each instruction consisting of a number of codes appearing at a fixed repetition rate over a set of a number of consecutive periods, each code comprising at least two pulses and the consecutive codes of an instruction being defined by modulation of the time intervals between the pulses of each code, it being possible for each order to be transmitted identically by one or more transmitters having predetermined transmission phase shifts, the system comprising :

Synchronizing means (8) receiving all the pulses of the transmitters and outputting treatment-enabling signals ($e_1$, $e_2$, ..., $e_n$) for detection means (6) and decoding means (7), the synchronizing means (8) comprising monostable means ($SS_1$, $SS_2$, ..., $SS_i$, ..., $SS_n$) to the same number as there are transmitters to be processed, the monostable means being connected in series and looped back on one another, one monostable means ($SS_i$) delivering at one output an enabling signal ($e_i$) in synchronism with a transmitter, the conductive time of the monostable means being greater than the conductive time of the code of longest duration of the instruction codes, the other monostable means delivering enabling signals respectively and in the same fashion and in synchronism with the other transmitters respectively, each monostable means inhibiting triggering of the other monostable means at least for the duration of each enabling signal it outputs ;

Detection means (6) receiving these enablements and the pulse and delivering consecutive numerical values corresponding to the respective time intervals, and

Decoding means (7) connected to the detection means (6) and synchronization means (8) and serving to compare the numerical values received from the detection means with recorded reference numerical values and, in the event of correlation between such values, to deliver at specific outputs signals ($S_1$, $S_2$, ...) corresponding to the decoded instructions.

2. A decoding system according to claim 1, characterised in that the detection means (6) comprise a clock (16) connected to counting means (19) by way of a logic unit (20) receiving at one input (17) all the pulses from the transmitter and, at another input (21), the enabling signals ($e_i$) output by the synchronizing means (8), the counting means (19) being operative to count through the agency of the logic unit (20) all the clock or timing pulses (16) output between the consecutively received pulses, the counting means (19) outputting to the decoding means (7) numerical values corresponding to such countings.

3. A decoding system according to claim 2, characterised in that the counting means (19) comprise a first counter and second counter ($C_0$, $C_1$) connected respectively to outputs of the logic unit (20) and adapted to be triggered respectively in response to two pulses, the first counter ($C_0$) which receives the first pulse being an overflow counter which stops its own counting and the counting of the other counter by means of an interruption signal (IT) when it reaches overflow, the numerical value of the code being the numerical value of the difference between the contents of the first counter ($C_0$) and the second counter ($C_1$) in the absence of interfering pulses.

4. A decoding system according to claim 3, characterised in that the counting means (19) comprise supplementary counters to the number of interfering pulses likely to mutilate an effective code that it is required to process.

5. A decoded system according to claim 4, characterised in that the decoding means (7) comprise a microprocessor (28) connected to a memory (29) and receiving at inputs the enabling signals ($e_i$) output by the synchronizing means (8) and the numerical values of the contents of the counters ($C_0$, $C_1$, ...), the microprocessor (28) comparing for each code the values of said differences with the numerical reference values stored in the memory and corresponding to the expected codes in each transmitted instruction.

6. A decoding system according to claim 5, characterised in that the decoding means (7) are adapted to process simultaneously instructions issued by various transmitters.

## Patentansprüche

1. Einrichtung zum Dekodieren von Befehlen, die durch eine Gruppe von zyklisch, synchron arbeitenden Pulssendern übertragen werden, wobei jeder Befehl aus mehreren Kodes besteht, die mit einer festen Wiederholungsfrequenz auf einer Gruppe von mehreren aufeinanderfolgenden Perioden erscheinen, wobei jeder Kode wenigstens zwei Impulse enthält und die aufeinanderfolgenden Kodes eines Befehls durch Modulation von Zeitintervallen definiert sind, die die Impulse eines jeden Kodes voneinander trennen, wobei jeder Befehl identisch von einem oder mehreren Sendern, die vorbestimmte Sendephasenabweichungen aufweisen, ausgesendet werden kann, die Einrichtung enthaltend :

Synchronisiereinrichtungen (8), die alle Impulse der Sender aufnehmen und an Ausgängen Verarbeitungsfreigabesignale ($e_1$, $e_2$, ..., $e_n$) für Demodulations- und Dekodiereinrichtungen (6, 7) liefern, wobei die Synchronisiereinrichtungen (8) monostabile Einrichtungen ($SS_1$, $SS_2$, ..., $SS_i$, ..., $SS_n$) gleicher Anzahl wie die der zu behandelnden Sender aufweisen, wobei diese Einrichtungen in Serie geschaltet und miteinander vermascht sind, eine monostabile Einrichtung ($SS_i$) an einem Ausgang ein Freigabesignal ($e_i$) synchron mit einem Sender abgibt, die Leitfähigkeitsdauer der monostabilen Einrichtung oberhalb jener des Kodes der höchsten Dauer in den Befehlskodes ist, die anderen monostabilen Einrichtungen in entsprechender Weise und auf gleiche Art Freigabesignale synchron mit den entsprechenden anderen Sendern abgeben, jede monostabile Einrichtung die Auslösung der anderen monostabilen Einrichtungen unterbindet wenigstens während der Zeitdauer eines jeden von ihr abgegebenen Freigabesignals,

Demodulationseinrichtungen (6), die die Freigaben und die Impulse aufnehmen und aufeinanderfolgende numerische Werte liefern, die entsprechend den genannten Zeitintervallen entsprechen,

Dekodiereinrichtungen (7), die mit den Demodulationseinrichtungen (6) und den Synchronisationseinrichtungen (8) verbunden sind, um die von den Demodulationseinrichtungen empfangenen numerischen Werte mit den gespeicherten numerischen Bezugswerten zu vergleichen und um im Falle einer Übereinstimmung zwischen diesen Werten an spezifischen Ausgängen Signale ($S_1$, $S_2$, ...) entsprechend den dekodierten Befehlen zu liefern.

2. Dekodiereinrichtung nach Anspruch 1, dadurch gekennzeichnet, daß die Demodulationseinrichtungen (6) eine Uhr (16) enthalten, die mit Zähleinrichtungen (19) über eine logische Schaltung (20) verbunden sind, die einerseits an einem Eingang (17) alle von den Sendern stammenden Impulse empfängt und andererseits an einem anderen Eingang (21) die Freigabesignale ($e_i$) empfängt, die von den Synchronisationseinrichtungen (8) geliefert werden, wobei die Zähleinrichtungen (19) mittels der logischen Schaltung (20) die Zählung aller Impulse der Uhr (16) gestatten, die zwischen den empfangenen aufeinanderfolgenden Impulsen geliefert werden, wobei die Zähleinrichtungen (19) an die Dekodiereinrichtungen (7) numerische Werte entsprechend dieser Zählungen liefern.

3. Dekodiereinrichtung nach Anspruch 2, dadurch gekennzeichnet, daß die Zähleinrichtungen (19) einen ersten und einen zweiten Zähler ($C_0$, $C_1$) enthalten, die entsprechend mit Ausgängen der logischen Schaltung (20) verbunden und dazu geeignet sind, entsprechend von zwei Impulsen ausgelöst zu werden, wobei der erste Zähler ($C_0$), der den ersten Impuls erhält, ein Kapazitätsüberlaufzähler ist, der seine Zählung wie die Zählung des anderen Zählers durch ein Unterbrechungssignal (IT) anhält, wenn er überläuft, wobei der numerische Wert des Kodes der numerische Wert der Differenz zwischen den Inhalten des ersten und des zweiten Zählers ($C_0$, $C_1$) ist, bei Abwesenheit von Störimpulsen.

4. Dekodiereinrichtung nach Anspruch 3, dadurch gekennzeichnet, daß die Zähleinrichtungen (19) so viele zusätzliche Zähler enthalten, wie vorgesehen ist, um Störimpulse zu behandeln, die einen Nutzkode stören können.

5. Dekodiereinrichtung nach Anspruch 4, dadurch gekennzeichnet, daß die Dekodiereinrichtungen (7) einen Mikroprozessor (28) enthalten, der mit einem Speicher (29) verbunden ist und an seinen Eingängen einerseits die Freigabesignale ($e_i$), die von den Synchronisationseinrichtunhgen (8) stammen, und andererseits die numerischen Werte der Inhalte der Speicher ($C_0$, $C_1$, ...) erhält, wobei der Mikroprozessor (28) für jeden Kode die Werte der genannten Differenzen mit den numerischen Bezugswerten vergleicht, die in dem Speicher gespeichert sind und entsprechend den in jedem ausgesandten Befehl erwarteten Kodes.

6. Dekodiereinrichtung nach Anspruch 5, dadurch gekennzeichnet, daß die Dekodiereinrichtungen (7) dazu geeignet sind, gleichzeitig die von unterschiedlichen Sendern abgegebenen Befehle zu verarbeiten.

FIG.1

IMPULSIONS RECUES
PAR LE REPONDEUR

FIG.2

(ORD1)

(ORD2)

FIG.3

0 099 277

FIG.4

FIG.6

FIG.5

0 099 277

FIG. 7

## FIG. 8

1er MODULE

```
                    ( e_i )
                      |
                      v
      +-------------------------------+
      |   IDENTIFICATION DE e_i        |
      |        INDEX R = i             |
      +-------------------------------+
      |   INDICOD = 0                  |  oui
      |   POUR RADAR R ?               |------+
      +-------------------------------+       v
              | non                    +-----------+
              |        non             |  M = 0 ?  |
              |  <---------------------|           |
              v                        +-----------+
      +-------------------------------+       | oui
      |  INDICOD = INDICOD+1           |       |
      |        M = 0                   |       |
      +-------------------------------+       |
              |  <-------------------------- -+
              v
        +-----------+
        |  ATTENTE  |
        +-----------+
```

## FIG. 9

2ème MODULE

```
      +-------------------------------+
      |   LECTURE DE X1                |
      |   DU COMPTEUR C_1              |
      +-------------------------------+
      |        X1 = 0 ?               |  oui    +-----------+
      |                               |-------->|  ATTENTE  |
      +-------------------------------+         +-----------+
              | non
      +-------------------------------+
      |   c_1 = 32 - X_1               |
      |   LECTURE DE X_2 DU            |
      |   COMPTEUR C_2                 |
      +-------------------------------+
              |
              v
      +-------------------------------+
      |        X_2 = 0 ?              |  oui    +-----------+
      |                               |-------->|   N = 1   |
      +-------------------------------+         +-----------+
              | non                                   |
      +-------------------------------+               |
      |   c_2 = 32 X_2                 |               |
      |   c_3 = X_1 - X_2              |               |
      |   N = 3                        |               |
      +-------------------------------+               |
              |  <--------------------------------- --+
              v
      +-------------------------------+
      |        R                      |  non
      |   INHIB = 0 ?                 |--------+
      +-------------------------------+        |
              | oui                            v
      +-------------------+        +-------------------+
      | APPEL 3° MODULE   |        | APPEL 4° MODULE   |
      +-------------------+        +-------------------+
```

# FIG.10

```
                          DU 2° MODULE

                            I = N

                                              oui
                    CODE(I) = INT ? ──────────────────┐
                                                      │
                                                      ▼
                         I = I - 1              CINT = CINT+1

              non                                              non
         ◄─────────    I = 0 ?              CINT = n₂ ? ──────────┐
                                                                  │
3ème MODULE            oui                    oui                 │
                                                                  │
                                          INHIB = 1               │
                       ABS = ABS+1        ABS   = 0               │
                                                                  │
              non                                                 │
         ◄────────      ABS ⩾ Max                                 │
                                                                  │
                        oui                                       │
                                                                  │
                      INHIB  = 0                                  │
                       A(1)  = 0                                  │
                       N(1)  = 0                                  │
                       A(2)  = 0                                  │
                       N(2)  = 0                                  │
                       CINT  = 0                                  │
                      INDICOT = 0                                 │
                                                                  │
                                          ATTENTE  ◄──────────────┘
```

$CINT = n_2$ ?

# FIG.11

4ème MODULE